# EUROPEAN PATENT APPLICATION

(11) **EP 4 765 268 A1**
(43) Date of publication of application: **24.06.2026**
(21) Application number: 25222822.6
(22) Date of filing: 12.12.2025
(51) Int. Cl.: H01M 10/04, G06T 7/13, G06V 10/44, H01M 10/0585, G06T 7/73

(54) **APPARATUS AND METHOD FOR IDENTIFYING THE POSITION OF VERTICES OF ELECTROCHEMICAL CELL ELEMENTS ON A STACKING SURFACE IN A STACKING DEVICE IN AN ELECTROCHEMICAL CELL MANUFACTURING MACHINE**

(30) Priority: 20.12.2024 IT 202400029337
(71) Applicant: G.D S.p.A., 40133 Bologna (BO) (IT)
(72) Inventor: FORTINI, Massimo, I-40133 Bologna (BO) (IT); NOFERINI, Giacomo, I-40133 Bologna (BO) (IT); PETTINARI, Fabrizio, I-40133 Bologna (BO) (IT)
(74) Representative: Porta & Consulenti Associati S.p.A.

(57) **Abstract**

An apparatus (27) for identifying the position of vertices of electrochemical cell elements on a surface, comprising a detection device (28) placed in a display relationship with a first control area (29a) and a second control area (29b) both defined at a stacking surface (25) and configured to detect a first plurality of display data in the first control area (29a) and a second plurality of display data in the second control area (29b) which are represented by respective plurality of contrast transition zones in an image; wherein the first control area (29a) and the second control area (29b) are placed at a stacking surface (25) at respective expected positions of receiving a first edge (101) and a second edge (102) of an electrochemical cell element (100) not parallel to each other; a processing unit (33) operatively associated with the detection device (28) and configured to: obtain the first plurality of display data; obtain the second plurality of display data; on the basis of the first plurality of display data obtained determine a first line (A1) representative of the first edge (101) of the electrochemical cell element (100) and on the basis of the second plurality of display data obtained determine a second line (A2) representative of the second edge (102) of the electrochemical cell element (100) on the basis of statistical models applied to the plurality of contrast transition zones of the image; on the basis of the determination of the first line (A1) and the second line (A2), calculate the point of intersection of the first line (A1) with the second line (A2).

## Description

The present invention refers to an apparatus for identifying the position of vertices of electrochemical cell elements in a stacking device of an electrochemical cell manufacturing machine and to a method for identifying the position of vertices of electrochemical cell elements in a stacking device of an electrochemical cell manufacturing machine.

An electrochemical cell is a device capable of converting chemical energy into electrical energy (and/or vice versa), such as galvanic cells, both primary and secondary, fuel cells or electrolytic cells.

The present invention finds a preferred, although not exclusive, application in the sector of the manufacture of electric accumulators, for the production of which a stacking device is used which stacks electrochemical cell elements on each other.

In the industrial sector of the production of electric accumulators, electrochemical cells are produced made from electrochemical cell elements stacked between them on top of each other, possibly with a separation layer in dielectric material interposed, generally indicated in the technical jargon of the sector with the term "separator".

The electrochemical cell elements may be semi-finished products comprising alternating layers of separator, cathode electrode and anode electrode, wherein the cathode electrode and anode electrode are provided in the form of generally rectangular plates or sheets cut from continuous strips of material. Alternatively, the electrochemical cell elements may be cathode electrodes, anode electrodes and one or more separator strips, wherein the cathode electrodes and the anode electrodes are provided in the form of generally rectangular plates or sheets cut from continuous strips of material. In the latter case, the separator may be a continuous strip arranged in a serpentine pattern between each anode electrode and each cathode electrode or may be provided in the form of sheets which are interposed between each anode electrode and each cathode electrode. The cathode electrodes and the anode electrodes are substantially made by depositing a layer of electrode active material on one surface or both surfaces of a strip consisting of a current collector metal foil. By choosing an appropriate combination of electrode active material and strip material, electrodes which are intended to make positive electrodes and electrodes intended to make negative electrodes can be obtained.

In the production of electric accumulators of this type, the layers of electrochemical cell elements are stacked together by means of a stacking device which alternately picks up the electrochemical cell elements among them and places them stacked together on a stacking surface.

In the Applicant's experience, when a first electrochemical cell element is deposited on the stacking surface, or on an electrochemical cell element already deposited on the stacking surface, the first electrochemical cell element (e.g. a cathode electrode) is held in place by first grippers that retain it on the stacking surface. Above the first deposited electrochemical cell element the dielectric separator (in sheet or continuous strip form) is laid. When a second electrochemical cell element (for example an anode element) is deposited on the dielectric separator, the second electrochemical cell element rests at two vertices on the first grippers (which retain the first electrochemical cell element) and is retained by second grippers. Upon subsequent deposition of a third electrochemical cell element (e.g. a cathode electrode), the first grippers release the first electrochemical cell element and grasp the third gripper element retaining it in the stack being formed. The third gripping element rests on the second grippers that are retaining the second electrochemical cell element on the stacking surface.

The Applicant has verified that it is very important to check the deposition accuracy of the various electrochemical cell elements in order to comply with high manufacture standards. In fact, the vertices of each layer of electrochemical cell element must have a predefined position within the stack being formed, on the one hand to guarantee the most optimal electrochemical performance of the electrochemical cell and, on the other, to avoid a short circuit between the layers of electrochemical cell elements.

The Applicant has observed that this check should be carried out for each deposited electrochemical cell element and before a further electrochemical cell element is deposited, in such a way as to be able to intervene promptly in the event that the deposition accuracy is not adequate.

However, the Applicant has verified that, at the time of deposition of each electrochemical cell element, the vertices of the electrochemical cell element may not be accessible for immediate positioning check, or in any case it may be difficult to detect the exact position of the vertices of the electrochemical cell element.

The Applicant has perceived that the exact position of the vertices of the electrochemical cell element could be obtained through a direct view of parts of the electrochemical cell element and through geometric considerations deriving from the fact that the electrochemical cell element is obtained by cutting a continuous strip.

The Applicant has in fact noted that said continuous strip has two sides or edges substantially parallel to each other and that the electrochemical cell element is delimited by said two sides or edges substantially parallel to each other and by two cutting lines each of which is straight in such a way that the electrochemical cell element has a quadrangular and preferably generally rectangular shape.

The Applicant has therefore found that by determining a first line passing through points belonging to a first edge of the electrochemical cell element and a second line passing through points belonging to a second edge not parallel to the first edge of the electrochemical cell element, the position of a vertex of the electrochemical cell element could be determined from the point of intersection of the first line and the second line.

The present invention therefore refers, in a first aspect thereof, to an apparatus for identifying the position of vertices of electrochemical cell elements on a stacking surface in a stacking device in an electrochemical cell manufacturing machine.

Preferably, the apparatus comprises a detection device.

Preferably, the detection device comprises at least one optical detector configured to acquire images and is placed in a display relationship with a first control area.

Preferably, the detection device is placed in a display relationship with a second control area.

Preferably, the first control area and the second control area are defined at a stacking surface.

Preferably, the detection device is configured to detect a first plurality of display data in said first control area and to detect a second plurality of display data in said second control area.

Preferably, said first plurality of display data is represented by a plurality of contrast transition zones in an image acquired in said first control area.

Preferably, said second plurality of display data is represented by a plurality of contrast transition zones in an image acquired in said second control area.

Preferably, said first control area and said second control area are placed at a stacking surface at respective expected positions of receiving a first edge and a second edge of an electrochemical cell element not parallel to each other.

Preferably, the apparatus comprises a processing unit operatively associated with said detection device.

Preferably, the processing unit is configured to obtain said first plurality of display data.

Preferably, the processing unit is configured to obtain said second plurality of display data.

Preferably, the processing unit is configured to, on the basis of said first plurality of display data obtained, determine a first line representative of the first edge of the electrochemical cell element.

Preferably, the processing unit is configured to, on the basis of said second plurality of display data obtained, determine a second line representative of the second edge of the electrochemical cell element.

Preferably, said first line is a straight line describing the first plurality of display data on the basis of a statistical model applied to said plurality of contrast transition zones of the image acquired in said first control area.

Preferably, said second line is a straight line describing the first plurality of display data on the basis of a statistical model applied to said plurality of contrast transition zones of the image acquired in said second control area.

Preferably, the processing unit is configured to, on the basis of the determination of the first line and the second line, calculate the point of intersection of the first line with the second line.

The Applicant has noted that the electrochemical cell element, when captured in an image, exhibits a different brightness than the brightness of the environment surrounding the electrochemical cell element. Such different brightness between the electrochemical cell element and the surrounding environment generates a contrast transition in a transition zone between an edge of the electrochemical cell element and the surrounding environment. Depending on the resolution, in terms of pixels per square inch (PPI), of the image, this transition zone may affect more or less pixels of the image.

The Applicant has found that by detecting such transition zones within the first control area it is possible to mathematically determine the first line representative of the first edge of the electrochemical cell element.

The Applicant has similarly found that by detecting such transition zones within the second control area it is possible to mathematically determine the second line representative of the second edge of the electrochemical cell element.

The Applicant considers that in this way it is possible to determine the exact position of one or more vertices of the electrochemical cell element. The choice of the exact position of the first and second control area can be made based on the actual stacking process, depending on the type of electrochemical cell element used and depending on the portions of said electrochemical cell element that are directly visible when the electrochemical cell element is deposited on the stacking surface.

The present invention refers, in a second aspect thereof, to a stacking device of an electrochemical cell manufacturing machine.

Preferably, the device comprises a stacking surface.

Preferably, the device comprises grippers to grasp an electrochemical cell element deposited on the stacking surface.

Preferably, the grippers comprise first grippers and second grippers.

Preferably, the device comprises an apparatus according to the first aspect of the present invention, wherein said first control area and said second control area are placed at said stacking surface.

The present invention refers, in a third aspect thereof, to an electrochemical cell manufacturing machine.

Preferably, the machine comprises a forming station of electrochemical cell elements.

Preferably, the machine comprises a stacking device in accordance with the second aspect of the invention.

The present invention refers, in a fourth aspect thereof, to a method for identifying the position of vertices of electrochemical cell elements in a stacking device of an electrochemical cell manufacturing machine.

Preferably, it is provided for detecting a first plurality of display data in a first control area located at a first edge of the electrochemical cell by acquiring an image of the first control area.

Preferably, it is provided for detecting a second plurality of display data in a second control area located at a second edge of the electrochemical cell not parallel to said first edge by acquiring an image of the second control area.

Preferably, it is provided on the basis of said first plurality of display data for determining a first line representative of the first edge of the electrochemical cell element by applying a statistical model to a plurality of contrast transition zones of the acquired image of said first control area.

Preferably, on the basis of said second plurality of display data determining a second line representative of the second edge of the electrochemical cell element by applying a statistical model to a plurality of contrast transition zones of the acquired image of said second control area.

Preferably, it is provided for calculating the point of intersection of the first line with the second line.

The present invention refers, in a fifth third aspect, to a method for manufacturing electrochemical cells.

Preferably, it is provided for feeding electrochemical cell elements.

Preferably, it is provided for placing an electrochemical cell element on a stacking surface and retaining said electrochemical cell element on said stacking surface with grippers.

Preferably, it is provided for identifying the position of at least a first vertex of said electrochemical cell element by implementing a method in accordance with the fourth aspect of the present invention.

The expression "electrochemical cell element" means both a semi-finished product obtained by coupling alternating layers of separator, cathode electrode and anode electrode, in which the cathode electrode and the anode electrode are provided in the form of generally rectangular plates or sheets cut from continuous strips of material, and individual cathode electrodes and anode electrodes in the form of generally rectangular plates or sheets cut from continuous strips of material.

The term "contrast", when referred to an image, means the ratio or difference between brightness values in the image. A contrast transition is the ratio or difference between different brightness values between adjacent points or zones in the image.

The present invention may have at least one of the preferred features described below. Such features may therefore be present individually or in combination with each other, unless expressly stated otherwise, in any aspect of the present invention.

Preferably, the electrochemical cell element comprises four edges each of which delimits an end of the electrochemical cell. Preferably, each pair of edges of the electrochemical cell meet at a corresponding vertex of the electrochemical cell.

Preferably, a first edge of the electrochemical cell element meets a second edge of the electrochemical cell element at a first vertex. Preferably, a third edge of the electrochemical cell element meets the second edge of the electrochemical cell element at a second vertex. Preferably, a fourth edge of the electrochemical cell element meets the first edge of the electrochemical cell element at a first final vertex. Preferably, the fourth edge of the electrochemical cell element meets the third edge of the electrochemical cell element at a second final vertex.

Preferably, the first edge is substantially parallel to the third edge.

Preferably, the second edge is substantially parallel to the fourth edge.

Preferably, a plurality of electrochemical cell elements are deposited on each other on the stacking surface in such a way as to realize a stack of electrochemical cell elements.

Preferably, each electrochemical cell element is deposited on the stacking surface in an expected position. This expected position is defined by the position that the electrochemical cell element should actually occupy, on the basis of a design operation of the machine, on the stacking surface.

The first control area is defined at the expected position of the first edge of the electrochemical cell element.

The first control area is defined at the expected position of a portion of the first edge of the electrochemical cell element.

Preferably, the first control area is defined at the first edge in a position closer to the first vertex than to the first final vertex.

Preferably, a portion of the electrochemical cell element, which comprises a portion of the first edge, and part of the environment surrounding the electrochemical cell element is placed in the first control area.

The second control area is defined at the expected position of the second edge of the electrochemical cell element.

The second control area is defined at the expected position of a portion of the second edge of the electrochemical cell element.

Preferably, the second control area is defined at the second edge in a position closer to the first vertex than to the second vertex.

Preferably, a portion of the electrochemical cell element, which comprises a portion of the second edge, and part of the environment surrounding the electrochemical cell element is placed in the second control area.

Preferably, the first control area has a first dimension in a direction substantially parallel to the first edge and a second dimension in a direction perpendicular to the first edge of the electrochemical cell element. Preferably, the first dimension is less than one quarter of the length of the first edge and greater than one twentieth of the length of the first edge. Preferably the second dimension is less than the first dimension.

Preferably, the second control area has a first dimension in a direction substantially parallel to the second edge and a second dimension in a direction perpendicular to the second edge of the electrochemical cell element. Preferably, the first dimension is less than one quarter of the length of the second edge and greater than one twentieth of the length of the second edge. Preferably the second dimension is less than the first dimension.

Preferably, said at least one optical detector is placed in elevation with respect to the stacking surface.

Preferably, said at least one optical detector is placed in elevation with respect to the electrochemical cell element.

Preferably, said at least one optical detector is configured to frame the first control area.

Preferably, said at least one optical detector is configured to frame the second control area.

Preferably, said detection device comprises a first TV camera or camera configured to simultaneously acquire images of said first control area and images of said second control area.

Preferably, said at least one optical detector is configured to detect contrast transition zones within the first control area.

Preferably, said at least one optical detector is configured to detect contrast transition zones within the second control area.

Preferably, acquiring an image of the first control area comprises acquiring a plurality of minimum units of the image. Such minimum image units are preferably pixels. Preferably, such pixels are organised according to a grid matrix.

Preferably, acquiring an image of a control area comprises acquiring a plurality of minimum units of the image. Such minimum image units are preferably pixels.

Preferably, a pair of coordinates in a Cartesian survey plane is uniquely associated with each pixel.

Preferably, each contrast transition zone of the image in said first control area is defined by a pixel in which a predetermined difference in brightness with respect to adjacent pixels is identified.

Preferably, each contrast transition zone of the image in said second control area is defined by a pixel in which a predetermined difference in brightness with respect to adjacent pixels is identified.

Preferably, applying a statistical model comprises identifying a plurality of contrast transition zones and placing each contrast transition zone in a unique relationship with a pair of coordinates of a Cartesian survey plane.

Preferably, said statistical model identifies further pairs of coordinates in said Cartesian survey plane, different from the pairs of coordinates placed in a unique relationship with respective contrast transition zones.

Preferably, said statistical model defines a first-degree linear equation associated with said first line describing the first plurality of display data.

Preferably, said statistical model defines a first-degree linear equation associated with said second line describing the second plurality of display data.

Said statistical model is for example a linear regression.

Preferably, said processing unit is configured to determine said first line and said second line and to calculate a point of intersection between said first line and said second line. The point of intersection of said first line and said second line identifies the first vertex of the electrochemical cell element.

Preferably, the point of intersection between the first line and the second line is defined by a pair of Cartesian coordinates in a Cartesian survey plane.

Preferably, said detection device is further placed in a display relationship with a third control area and is configured to detect a third plurality of display data in said third control area.

The third control area is defined at the expected position of a portion of the third edge of the electrochemical cell element.

Preferably, the third control area is defined at the third edge in a position closer to the second vertex than to the second final vertex.

Preferably, a portion of the electrochemical cell element, which comprises a portion of the third edge, and part of the environment surrounding the electrochemical cell element is placed in the third control area.

Preferably, the third control area has a first dimension in a direction substantially parallel to the third edge and a second dimension in a direction perpendicular to the third edge of the electrochemical cell element. Preferably, the first dimension is less than one quarter of the length of the second edge and greater than one twentieth of the length of the second edge. Preferably the second dimension is less than the first dimension.

Preferably, said detection device is placed in a display relationship with a fourth control area and is configured to detect a fourth plurality of display data in said fourth control area.

The fourth control area is defined at the expected position of a portion of the second edge of the electrochemical cell element.

Preferably, the fourth control area is defined at the second edge in a position closer to the second vertex than to the first vertex.

Preferably, a portion of the electrochemical cell element, which comprises a portion of the second edge, and part of the environment surrounding the electrochemical cell element is placed in the fourth control area.

Preferably, the fourth control area has a first dimension in a direction substantially parallel to the second edge and a second dimension in a direction perpendicular to the second edge of the electrochemical cell element. Preferably, the first dimension is less than one quarter of the length of the second edge and greater than one twentieth of the length of the second edge. Preferably the second dimension is less than the first dimension.

Preferably, the detection device comprises a second TV camera or a second camera for simultaneously acquiring images of said third control area and images of said fourth control area.

Preferably, said processing unit is configured to obtain said third plurality of display data.

Preferably, said processing unit is configured to obtain said fourth plurality of display data.

Preferably, said processing unit is configured to determine a third line representative of the third edge of the electrochemical cell element on the basis of said third plurality of display data obtained.

Preferably, said processing unit is configured to determine a fourth line further representative of the second edge of the electrochemical cell element on the basis of said fourth plurality of display data obtained.

Preferably, said processing unit is configured to calculate the point of intersection of the third line with the second line on the basis of the determination of the third line.

Preferably, the point of intersection of the third line with the second line identifies the second vertex of the electrochemical cell element.

Alternatively, said processing unit is configured to calculate the point of intersection of the third line with the fourth line on the basis of the determination of the fourth line and the third line.

In this case, the point of intersection of the third line with the fourth line identifies the second vertex of the electrochemical cell element.

Preferably, said at least one optical detector is configured to frame the third control area.

Preferably, said at least one optical detector is configured to frame the fourth control area.

Preferably, detecting a third plurality of display data comprises acquiring an image of the third control area.

Preferably, detecting a fourth plurality of display data comprises acquiring an image of the fourth control area.

Preferably, said third plurality of display data is represented by a plurality of contrast transition zones in an image acquired in said third control area.

Preferably, said fourth plurality of display data is represented by a plurality of contrast transition zones in an image acquired in said fourth control area.

Preferably, said at least one optical detector is configured to detect contrast transition zones within the third control area.

Preferably, said at least one optical detector is configured to detect contrast transition zones within the fourth control area.

Preferably, each contrast transition zone of the image in said third control area is defined by a pixel in which a predetermined difference in brightness with respect to adjacent pixels is identified.

Preferably, each contrast transition zone of the image in said fourth control area is defined by a pixel in which a predetermined difference in brightness with respect to adjacent pixels is identified.

Preferably, said third line is a straight line describing the third plurality of display data on the basis of a statistical model.

Preferably, determining a third line representative of the first edge of the electrochemical cell element on the basis of said first plurality of display data comprises applying a statistical model to a plurality of contrast transition zones of the image in said third control area.

Preferably, said fourth line is a straight line describing the fourth plurality of display data on the basis of a statistical model.

Preferably, determining a fourth line further representative of the second edge of the electrochemical cell element on the basis of said fourth plurality of display data comprises applying a statistical model to a plurality of contrast transition zones of the image in said fourth control area.

Preferably, said statistical model defines a first-degree linear equation associated with said third line describing the third plurality of display data.

Preferably, said statistical model defines a first-degree linear equation associated with said fourth line describing the fourth plurality of display data.

Preferably, said processing unit is preferably configured to determine said third line and to calculate a point of intersection between said third line and said second line. The point of intersection of said third line and said second line identifies the second vertex of the electrochemical cell element.

Preferably, the point of intersection between the third line and the second line is defined by a pair of Cartesian coordinates in a Cartesian survey plane.

Alternatively, said processing unit is preferably configured to determine said third line and said fourth line and to calculate a point of intersection between said third line and said fourth line. The point of intersection of said third line and said fourth line identifies the second vertex of the electrochemical cell element.

Preferably, the point of intersection between the third line and the fourth line is defined by a pair of Cartesian coordinates in a Cartesian survey plane.

Preferably, the electrochemical cell elements are deposited one at a time at the stacking surface.

Preferably, when an electrochemical cell element is deposited at the stacking surface, the electrochemical cell element is retained by first grippers.

Preferably, the first grippers act on the first vertex of the electrochemical cell element hiding said first vertex from direct view by the detection device.

Preferably, the first grippers act on the second vertex of the electrochemical cell element hiding said second vertex from direct view by the detection device.

The first control area is preferably located in a zone outside the encumbrance defined by the first grippers.

Preferably, no vertex of the electrochemical cell element is included in the first control area.

The second control area is preferably located in a zone outside the encumbrance defined by the first grippers.

Preferably, no vertex of the electrochemical cell element is included in the second control area.

The first control area is preferably located in a zone directly observable by the detection device.

The second control area is preferably located in a zone directly observable by the detection device.

The third control area is preferably located in a zone outside the encumbrance defined by the first grippers.

Preferably, no vertex of the electrochemical cell element is included in the third control area.

The fourth control area is preferably located in a zone outside the encumbrance defined by the first grippers.

Preferably, no vertex of the electrochemical cell element is included in the fourth control area.

The third control area is preferably located in a zone directly observable by the detection device.

The fourth control area is preferably located in a zone directly observable by the detection device.

Preferably, said at least one optical detector is a camera.

Preferably, it is provided for placing in a unique relationship a sample image of said optical detector with a Cartesian survey plane.

Preferably, each contrast transition zone is placed in a unique relationship with a pair of coordinates of said Cartesian survey plane.

Further features and advantages of the present invention will be better apparent from the following detailed description of a preferred embodiment thereof, with reference to the appended drawings and provided by way of indicative and nonlimiting example, wherein:
- Figure 1 is a schematic view of an electrochemical cell manufacturing machine in accordance with an aspect of the present invention;

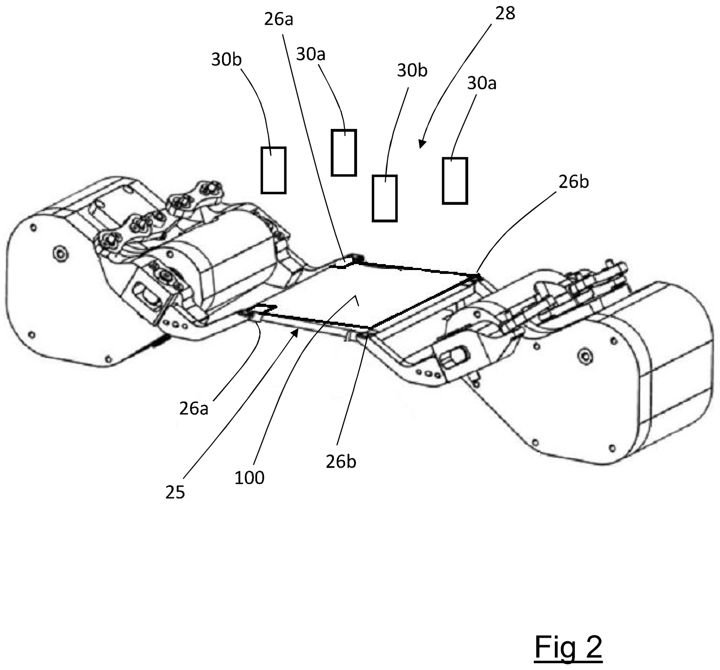

- Figure 2 is a schematic view of a part of a stacking device of electrochemical cell elements of the machine of Figure 1;
- Figures 3 and 4 are schematic representations from above of an electrochemical cell element placed on a stacking surface of the stacking device of Figure 2;
- Figure 5 is a schematic representation of a control area on the stacking surface of the stacking device; and
- Figure 6 is a schematic representation of some components of an apparatus for identifying the position of vertices of electrochemical cell elements on the stacking surface of the stacking device.

The representations in the accompanying figures do not necessarily have to be understood in scale and do not necessarily respect the proportions between the various parts.

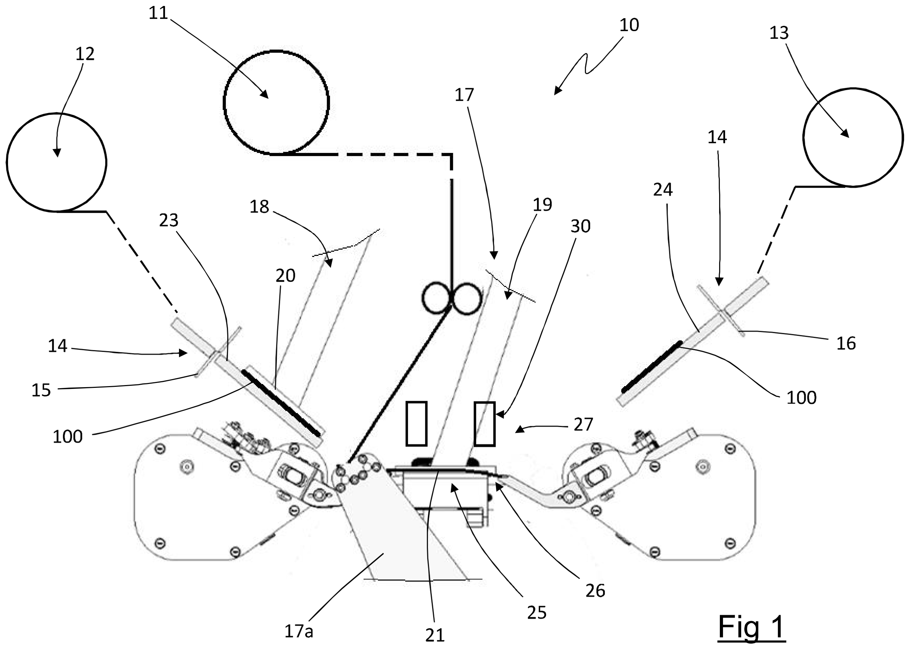

In Figure 1, an electrochemical cell manufacturing machine has been indicated as a whole with number 10.

The electrochemical cells are composed of a stacking of electrochemical cell elements.

The electrochemical cell elements 100 may be semi-finished products comprising alternating layers of separator, cathode electrode and anode electrode, wherein the cathode electrode and anode electrode are provided in the form of generally rectangular plates or sheets cut from continuous strips of material. The electrochemical cell elements may further be cathode electrodes, anode electrodes and one or more separator strips, wherein the cathode electrodes and the anode electrodes are provided in the form of generally rectangular plates or sheets cut from continuous strips of material. In this case, the separator may be a continuous strip arranged in a serpentine pattern between each anode electrode and each cathode electrode.

The following description will explicitly refer to the case where the electrochemical cell elements are cathode electrodes and anode electrodes. The person skilled in the art will understand that what is described below applies identically also to the case in which the electrochemical cell elements are semi-finished.

As schematically illustrated in Figure 1, the machine 10 comprises a first unwinding spindle 11 for a dielectric separator coil, a second unwinding spindle 12 for an electrochemical cell element 100 of a first type (for example an anode electrode) and a third unwinding spindle 13 for an electrochemical cell element 100 of a second type (for example a cathode electrode).

The machine 10 further comprises a forming station 14 of electrochemical cell elements comprising a first cutting device 15 and a second cutting device 16, schematized in Figure 1. The first cutting device 15 is configured to cut sheets of the electrochemical cell element 100 of the first type in such a way as to define a plurality of electrochemical cell elements 100 of the first type of substantially rectangular shape. The second cutting device 16 is configured to cut sheets of the electrochemical cell element 100 of the second type in such a way as to define a plurality of electrochemical cell elements 100 of the second type of substantially rectangular shape. In the case where the electrochemical cell element were a semi-finished product, the forming station 14 would also comprise a device for layering separator, cathode electrode and anode electrode in an alternated manner between them.

The machine 10 comprises, in a position subsequent to the forming station 14, a stacking device 17, as schematized in Figure 1.

The stacking device 17 comprises a first transfer device 18 of electrochemical cell elements 100 of the first type and a second transfer device 19 of electrochemical cell elements 100 of the second type.

The first transfer device 18 comprises, in the embodiment illustrated in Figure 1, a transfer plate 20 configured to contact and retain an electrochemical cell element 100 of the first type. The transfer plate 20 may for example comprise a suction device or suction cups (not illustrated).

Similarly, the second transfer device 19 comprises a transfer plate 21 configured to contact and retain an electrochemical cell element 100 of the second type. The transfer plate 21 may for example comprise a suction device or suction cups (not illustrated).

The stacking device 17 further comprises a conveyor 22 placed downstream of the forming station or integrated into the forming station 14. The conveyor 22 comprises a first conveyor branch 23 subservient to the first transfer device 18 and a second conveyor branch 24 subservient to the second transfer device 19.

The first transfer device 18 is movable between a pick-up position and a release position. In the pick-up position, the transfer plate 20 is substantially placed at the conveyor 22 (and in particular the first conveyor branch 23) and in contact with an electrochemical cell element 100 of the first type. The second transfer device 19 is movable between a pick-up position and a release position. In the pick-up position, the transfer plate 21 is substantially placed at the conveyor 22 (and in particular the second conveyor branch 24) and in contact with an electrochemical cell element 100 of the second type.

The stacking device 17 comprises a stacking surface 25 placed between the first transfer device 18 and the second transfer device 19.

When the first transfer device 18 is in the release position, the transfer plate 20 is placed at the stacking surface 25 to deposit an electrochemical cell element 100 of the first type on the stacking surface 25. When the second transfer device 19 is in the release position, the transfer plate 21 is placed at the stacking surface 25 to deposit an electrochemical cell element 100 of the second type on the stacking surface 25. The first transfer device 18 and the second transfer device 19 move substantially counterphase. The first transfer device 18 and the second transfer device 19 are never both in the respective release positions. When the first transfer device 18 is in the release position, the second transfer device 19 is in the pick-up position, or is moving between the pick-up position and the release position. When the second transfer device 19 is in the release position, the first transfer device 18 is in the pick-up position, or is moving between the pick-up position and the release position. The continuous movement of the first transfer device 18 and the second transfer device 19 from the respective pick-up positions to the respective release positions (and from the respective release positions to the respective pick-up positions) results in the formation of a stack of electrochemical cell elements 100 on the stacking surface 25.

The separator is fed as a continuous strip to the stacking surface 25. The stacking device 17 comprises a diverter 17a configured to operate on the separator. The diverter 17a operates at the stacking surface 25 and is arranged between the first transfer device 18 and the second transfer device 19. The diverter 17a has the function of positioning the separator between the electrochemical cell elements 100 of the first type and of the second type that are deposited on the stacking surface 25.

The stacking device 17 comprises grippers 26 which grasp and retain the electrochemical cell element 100 which is deposited on the stacking surface 25. The grippers 26 comprise first grippers 26a and second grippers 26b. The first grippers 26a are arranged on the side directed towards the first transfer device 18 and the second grippers 26b are directed towards the second transfer device 19. The grippers 26 grasp the electrochemical cell element 100 which is deposited on the stacking surface 25 at two vertices of the electrochemical cell element 100 and remain in that position even when a subsequent electrochemical cell element 100 is deposited. The grippers grasp this subsequent electrochemical cell element 100 at two vertices opposite the vertices on which the grippers 26 that grasped the previous electrochemical cell element 100 are acting. A further deposition of electrochemical cell element 100 results in the disengagement of the grippers 26 on the electrochemical cell element 100 deposited as first and in the grasping of the just deposited electrochemical cell element 100.

Each electrochemical cell element 100 comprises four edges each of which delimits an end of the electrochemical cell element. A first edge 101 of the electrochemical cell element 100 meets a second edge 102 of the electrochemical cell element 100 at a first vertex V1. A third edge 103 of the electrochemical cell element 100 meets the second edge 102 at a second vertex V2. A fourth edge 104 of the electrochemical cell element 100 meets the first edge 101 at a first final vertex F1. The fourth edge 104 of the electrochemical cell element 100 meets the third edge 103 at a second final vertex F2. The first edge 101 is substantially parallel to the third edge 103 and the second edge 102 is substantially parallel to the fourth edge 104.

The first edge 101 of an electrochemical cell element 100 is defined by the edge that is closer to the transfer device which deposited said electrochemical cell element 100. For example, when the electrochemical cell element 100 has been deposited by the first transfer device 18, the first edge 101 of said electrochemical cell element 100 is defined by the edge that is closer to the first transfer device 18. When the electrochemical cell element 100 has been deposited by the second transfer device 19, the first edge 101 of said electrochemical cell element 100 is defined by the edge that is closer to the second transfer device 19.

The first vertex V1 and the second vertex V2 of an electrochemical cell element 100 are defined by the vertices on which the grippers 26 are acting. For example, when a first electrochemical cell element 100 of the first type is deposited on the stacking surface, the grippers 26 grasp and retain said electrochemical cell element 100 of the first type at the first vertex and the second vertex V2. When a first electrochemical cell element 100 of the second type is deposited on the stacking surface above the first electrochemical cell element 100 of the first type, the grippers 26 grasp and retain said electrochemical cell element 100 of the second type at the corresponding first vertex and second vertex V2. When a second electrochemical cell element 100 of the first type is deposited on the stacking surface above the first electrochemical cell element 100 of the second type, the grippers 26 release the first electrochemical cell element 100 of the first type and grasp and retain the second electrochemical cell element 100 of the first type at the corresponding first vertex and second vertex V2. The second electrochemical cell element 100 of the first type is resting at its own first final vertex F1 and second final vertex F2 on the grippers 26 that are retaining the first electrochemical cell element 100 of the second type.

The stacking device 17 comprises an apparatus 27 for identifying the position of the vertices of electrochemical cell elements 100 deposited on the stacking surface 25.

The apparatus 27 comprises a detection device 28 placed in a display relationship with control areas 29 defined at the stacking surface 25. The control areas 29 are defined at the stacking surface 25 at expected position of receiving the electrochemical cell element 100. The control areas 29 lie on control surfaces arranged parallel to each other and parallel to the stacking surface 25. The control areas 29 are placed in a position more proximal to the conveyor that deposited the electrochemical cell element 100 on the stacking surface. The control areas 29 are placed in a position more proximal to the first vertex V1 and the second vertex V2 than to the first final vertex F1 and the second final vertex F2.

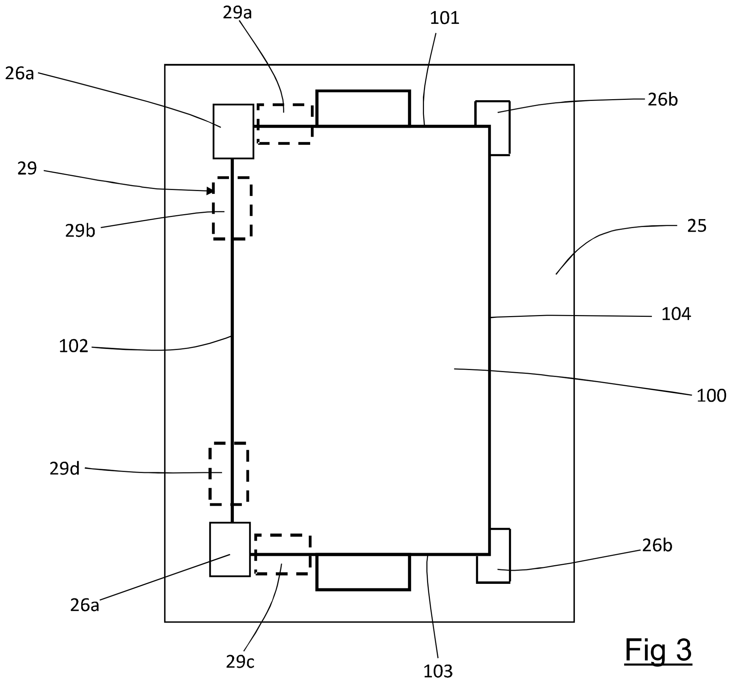

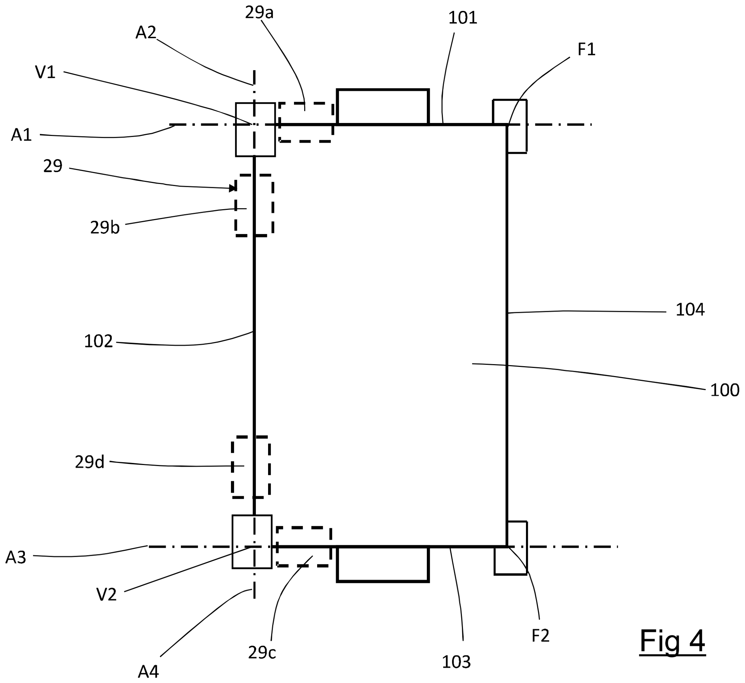

The control areas 29 comprise a first control area 29a defined at the expected position of the first edge 101 of the electrochemical cell element 100. The first control area 29a has a first dimension in a direction parallel to the first edge 101 and a second dimension in a direction parallel to the second edge 102 of the electrochemical cell element 100, as schematically illustrated in Figures 3 and 4.

The control areas 29 comprise a second control area 29b defined at the expected position of the second edge 102 of the electrochemical cell element 100. The second control area 29b has a first dimension in a direction parallel to the second edge 102 and a second dimension in a direction parallel to the first edge 101 of the electrochemical cell element 100, as schematically illustrated in Figures 3 and 4. The second control area 29a is closer to the first vertex V1 than to the second vertex V2.

The control areas 29 comprise a third control area 29c defined at the expected position of the third edge 103 of the electrochemical cell element 100. The third control area 29c has a first dimension in a direction parallel to the third edge 103 and a second dimension in a direction parallel to the second edge 102 of the electrochemical cell element 100, as schematically illustrated in Figures 3 and 4.

The control areas 29 comprise a fourth control area 29d defined at the expected position of the second edge 102 of the electrochemical cell element 100. The fourth control area 29d has a first dimension in a direction parallel to the second edge 102 and a second dimension in a direction parallel to the first edge 101 of the electrochemical cell element 100, as schematically illustrated in Figures 3 and 4. The fourth control area 29d is closer to the second vertex V2 than to the first vertex V1.

The detection device 28 comprises a plurality of optical detectors 30 configured to acquire images. Each optical detector 30 acquires images of one or more control areas 29. In an embodiment example, a first optical detector acquires images of the first control area 29a and the second control area 29b and a second optical detector acquires images of the third control area 29c and the fourth control area 29d when the control areas 29 are placed in a position more proximal to the first conveyor 18. A third optical detector acquires images of the first control area 29a and the second control area 29b and a fourth optical detector acquires images of the third control area 29c and the fourth control area 29d when the control areas 29 are placed in a position more proximal to the second conveyor 19. The optical detectors 30 may for example be a first TV camera 30a or a camera and a second TV camera 30b or a camera.

The optical detectors 30 are positioned above the stacking surface 25. The optical detectors 30 simultaneously acquire images of the first control area 29a and images of the second control area 29b. The optical detectors 30 simultaneously acquire images of the third control area 29c and images of the fourth control area 29d.

The detection device 28 is configured to detect a first plurality of display data in the first control area 29a. The detection device 28 is configured to detect a second plurality of display data in the second control area 29b. The detection device 28 is configured to detect a third plurality of display data in the third control area 29c. The detection device 28 is configured to detect a fourth plurality of display data in the fourth control area 29d.

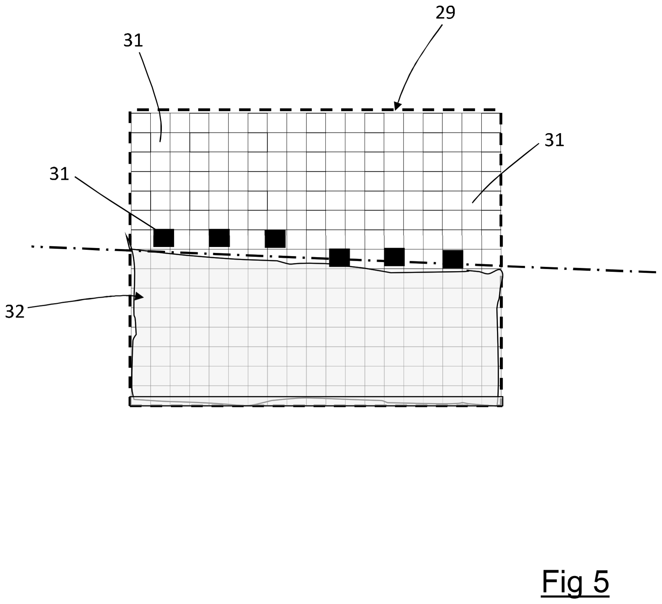

Each plurality of display data is represented by a plurality of contrast transition zones of the image acquired in the respective control area 29. Each image acquired in a control area 29 is composed of a plurality of minimum image units defined by pixels 31 organized according to a grid matrix 32, as schematically represented in Figure 5. The contrast transition zones of the image are identified by pixels 31 in which a predetermined difference in brightness with respect to adjacent pixels 31 is identified. This predetermined difference in brightness is rated on a grayscale ranging from white to black. Such a grayscale may comprise from 4 to 256 brightness levels. The predetermined difference in brightness between two adjacent pixels 31 may be defined by a difference comprised between 5 and 50 levels, preferably comprised between 5 and 30 levels, more preferably comprised between 5 and 20 levels, for example 10 levels of brightness in the grayscale. Figure 5 depicts in black some pixels 31 that identify the predetermined difference in brightness.

Each pixel 31 of each control area 29 is associated with a pair of coordinates in a same Cartesian survey plane.

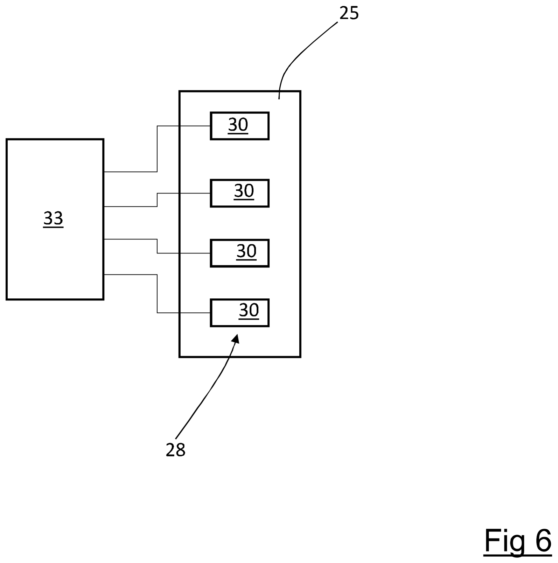

The apparatus 27 comprises a processing unit 33 schematized in Figure 6. The processing unit 33 is operatively associated with the detection device 28 to obtain the plurality of display data.

The processing unit 33 is configured to compare the display data with a calibration matrix. The detection device 28 is placed in an observational relationship with the calibration matrix to acquire the calibration matrix and transmit it to the processing unit. The calibration matrix comprises a plurality of reference points associated with the Cartesian survey plane wherein the distance between such reference points is known and predetermined. A pair of Cartesian coordinates in the Cartesian measurement plane is associated with each reference point.

The processing unit 33 is further configured to determine lines representing the respective edges of the electrochemical cell element 100. To this end, the processing unit 33, on the basis of the first plurality of display data obtained determines a first line A1 representative of the first edge 101 of the electrochemical cell element 100. The processing unit 33, on the basis of the second plurality of display data obtained determines a second line A2 representative of the second edge 102 of the electrochemical cell element 100. The processing unit 33, on the basis of the third plurality of display data obtained determines a third line A3 representative of the third edge 103 of the electrochemical cell element 100. The processing unit 33, on the basis of the fourth plurality of display data obtained determines a fourth line A4 further representative of the second edge 102 of the electrochemical cell element 100.

The determination of each line is implemented by the processing unit 33 by applying a statistical model to the plurality of contrast transition zones of the images in the respective control area 29. This statistical model determines the equation of a straight line for each of the first line A1, second line A2, third line A3 and fourth line A4, for example through a linear regression. This linear regression is based on the pairs of coordinates, in the Cartesian survey plane, of the pixels 31 in which the predetermined difference in brightness with respect to adjacent pixels 31 is identified. The equations of all straight lines are expressed in the same Cartesian reference plane.

By way of example, the equation of the straight line for the first line A1 is provided from the formula y = m1x + q1. The equation of the straight line for the second line A2 is provided from the formula y = m2x + q'2. The equation of the straight line for the third line A3 is provided from the formula y = m3x + q3. The equation of the straight line for the fourth line A4 is provided from the formula y = m4x + q4.

The processing unit 33 is further configured to calculate the point of intersection of the first line A1 with the second line A2 on the basis of the determination of the first line and the second line. This point of intersection uniquely defines the first vertex V1 of the electrochemical cell element 100.

This operation is performed by the processing unit 33 by calculating the point of intersection between the equation of the straight line for the first line A1 and the equation of the straight line for the second line A2. This point of intersection is expressed by a pair of coordinates V1x, V1y in the Cartesian reference plane.

The processing unit 33 is further configured to calculate the point of intersection of the third line A3 with the fourth line A4 on the basis of the determination of the third line and the fourth line. This point of intersection uniquely defines the second vertex V2 of the electrochemical cell element 100.

This operation is performed by the processing unit 33 by calculating the point of intersection between the equation of the straight line for the third line A3 and the equation of the straight line for the fourth line A4. This point of intersection is expressed by a pair of coordinates V2x, V2y in the Cartesian reference plane.

Alternatively, the processing unit 33 is configured to calculate the point of intersection of the third line A3 with the second line A2 on the basis of the determination of the third line and the second line. This point of intersection uniquely defines the second vertex V2 of the electrochemical cell element 100.

This operation is performed by the processing unit 33 by calculating the point of intersection between the equation of the straight line for the third line A3 and the equation of the straight line for the second line A2. This point of intersection is expressed by a pair of coordinates V2x, V2y in the Cartesian reference plane.

The vertices of the electrochemical cell element 100 that can be hidden from direct view by the grippers 26 are then uniquely determined.

## Claims

1. Apparatus (27) for identifying the position of vertices of electrochemical cell elements on a stacking surface in a stacking device in an electrochemical cell manufacturing machine, said apparatus comprising:
a detection device (28), comprising at least one optical detector (30) configured to acquire images, placed in a display relationship with a first control area (29a) and a second control area (29b) both defined at a stacking surface (25) and configured to detect a first plurality of display data in said first control area (29a) and to detect a second plurality of display data in said second control area (29b); wherein said first plurality of display data is represented by a plurality of contrast transition zones in an image acquired in said first control area (29a) and wherein said second plurality of display data is represented by a plurality of contrast transition zones in an image acquired in said second control area (29b);
wherein said first control area (29a) and said second control area (29b) are placed at a stacking surface (25) at respective expected positions of receiving a first edge (101) and a second edge (102) of an electrochemical cell element (100) not parallel to each other;
a processing unit (33) operatively associated with said detection device (28) and configured to:
obtain said first plurality of display data;
obtain said second plurality of display data;
on the basis of said first plurality of display data obtained determine a first line (A1) representative of the first edge (101) of the electrochemical cell element (100) and on the basis of said second plurality of display data obtained determine a second line (A2) representative of the second edge (102) of the electrochemical cell element (100);
wherein said first line (A1) is a straight line describing the first plurality of display data on the basis of a statistical model applied to said plurality of contrast transition zones of the image acquired in said first control area (29a) and wherein said second line (A2) is a straight line describing the first plurality of display data on the basis of a statistical model applied to said plurality of contrast transition zones of the image acquired in said second control area (29b);
on the basis of the determination of the first line (A1) and the second line (A2), calculate the point of intersection of the first line (A1) with the second line (A2).

2. Apparatus (27) according to claim 1, wherein said detection device (28) comprises a TV camera or camera configured to simultaneously acquire images of said first control area (29a) and images of said second control area (29b).

3. Apparatus (27) according to any one of the preceding claims, wherein said detection device (28) is placed in a display relationship with a third control area (29c) and is configured to detect a third plurality of display data in said third control area (29c);
wherein said third control area (29c) is placed at the stacking surface (25) in an expected position of receiving a third edge (103) substantially parallel to the first edge (101) of the electrochemical cell element (100);
wherein said processing unit (33) is further configured to:
obtain said third plurality of display data;
on the basis of said third plurality of display data obtained determine a third line (A3) representative of the third edge (103) of the electrochemical cell element (100);
on the basis of the determination of the third line (A3), calculate the point of intersection of the third line (A3) with the second line (A2).

4. Apparatus according to claim 3, wherein said third plurality of display data is represented by a plurality of contrast transition zones in an image acquired in said third control area (29c) and wherein said third line (A3) is a straight line describing the third plurality of display data on the basis of a statistical model applied to said plurality of contrast transition zones of the image acquired in said third control area (29c).

5. Apparatus (27) according to any one of claims 1 to 2, wherein said detection device (28) is placed in a display relationship with a third control area (29c) and a fourth control area (29d) and configured to detect a third plurality of display data in said third control area (29c) and to detect a fourth plurality of display data in said fourth control area (29d);
wherein said fourth control area (29d) and said third control area (29c) are placed at the stacking surface (25) at respective expected positions of receiving the second edge (102) and a third edge (103) of the electrochemical cell element (100) not parallel to each other;
wherein said processing unit (33) is further configured to:
obtain said third plurality of display data;
obtain said fourth plurality of display data;
on the basis of said third plurality of display data obtained determine a third line (A3) representative of the third edge (103) of the electrochemical cell element (100) and on the basis of said fourth plurality of display data obtained determine a fourth line (A4) further representative of the second edge (102) of the electrochemical cell element (100);
on the basis of the determination of the third line (A3) and the fourth line (A4), calculate the point of intersection of the third line (A3) with the fourth line (A4).

6. Apparatus according to claim 5, wherein said third plurality of display data is represented by a plurality of contrast transition zones in an image acquired in said third control area (29c) and wherein said third line (A3) is a straight line describing the third plurality of display data on the basis of a statistical model applied to said plurality of contrast transition zones of the image acquired in said third control area (29c).

7. Apparatus according to claim 5 or 6, wherein said fourth plurality of display data is represented by a plurality of contrast transition zones in an image acquired in said fourth control area (29d) and wherein said fourth line (A4) is a straight line describing the third plurality of display data on the basis of a statistical model applied to said plurality of contrast transition zones of the image acquired in said fourth control area (29d).

8. Apparatus (27) according to any one of claims 5 to 7, wherein said detection device (28) comprises a first TV camera or a first camera configured to simultaneously acquire images of said first control area (29a) and images of said second control area (29b) and a second TV camera or a second camera to simultaneously acquire images of said third control area (29c) and images of said fourth control area (29d).

9. Stacking device (17) of an electrochemical cell manufacturing machine comprising a stacking surface (25);
grippers (26) to grasp an electrochemical cell element (100) deposited on the stacking surface (25);
an apparatus (27) for identifying the position of vertices of electrochemical cell elements (100) according to any one of the preceding claims, wherein said first control area (29a) and said second control area (29b) are placed at said stacking surface (25).

10. Machine (10) for manufacturing electrochemical cells, comprising:
a forming station (14) of electrochemical cell elements (100);
a stacking device (17) according to claim 9.

11. Method for identifying the position of vertices of electrochemical cell elements in a stacking device of an electrochemical cell manufacturing machine, the method comprising:
detecting a first plurality of display data in a first control area (29a) located at a first edge (101) of the electrochemical cell (100) by acquiring an image of the first control area (29a);
detecting a second plurality of display data in a second control area (29b) located at a second edge (102) of the electrochemical cell (100) not parallel to said first edge by acquiring an image of the second control area (29b);
on the basis of said first plurality of display data determining a first line (A1) representative of the first edge (101) of the electrochemical cell element (100) by applying a statistical model to a plurality of contrast transition zones of the acquired image of said first control area (29a) and on the basis of said second plurality of display data determining a second line (A2) representative of the second edge (102) of the electrochemical cell element (100) by applying a statistical model to a plurality of contrast transition zones of the acquired image of said second control area (29b);
calculating the point of intersection of the first line (A1) with the second line (A2).

12. Electrochemical cell manufacturing method, the method comprising:
feeding electrochemical cell elements (100);
placing an electrochemical cell element (100) on a stacking surface (25) and retaining said electrochemical cell element (100) on said stacking surface (25) with grippers (26);
identifying the position of at least one first vertex (V1) of said electrochemical cell element (100) by implementing a method in accordance with claim 11.
